# FASCICULE DE BREVET EUROPEEN

(11) **EP 3 003 691 B1**
(45) Date de publication et mention de la délivrance du brevet: **02.12.2020**
(21) Numéro de dépôt: 14733283.7
(22) Date de dépôt: 06.06.2014
(51) Int. Cl.: B29C 67/00, B29D 11/00

(54) **PROCEDE ET MACHINE DE FABRICATION D'UNE LENTILLE OPHTALMIQUE**
VERFAHREN UND MASCHINE ZUR HERSTELLUNG EINER OPHTHALMISCHEN LINSE
PROCESS AND MACHINE FOR MANUFACTURING AN OPHTHALMIC LENS

(30) Priorité: 07.06.2013 FR 1355302
(43) Date de publication de la demande: 13.04.2016
(73) Titulaire: Essilor International, 94220 Charenton-le-Pont (FR)
(72) Inventeur: QUERE, Loïc, F-94220 Charenton-le-Pont (FR); GOURRAUD, Alexandre, F-94220 Charenton-le-Pont (FR); ALLIONE, Pascal, F-94220 Charenton-le-Pont (FR); BEGON, Cédric, F-94220 Charenton-le-Pont (FR)
(74) Mandataire: Santarelli
(86) Numéro de dépôt international: PCT/FR2014/051362
(87) Numéro de publication internationale: WO 2014/195653

(56) Documents cités:
- EP-A1- 2 474 404
- EP-A1- 2 537 642
- US-A1- 2004 046 287
- US-A1- 2011 042 839

## Description

### DOMAINE DE L'INVENTION

L'invention concerne le domaine de la fabrication des lentilles ophtalmiques présentant au moins une fonction optique, par exemple des lentilles ophtalmiques progressives.

L'invention concerne plus particulièrement un procédé de fabrication de telles lentilles ophtalmiques.

L'invention concerne également une machine de fabrication de telles lentilles ophtalmiques.

### ARRIERE PLAN TECHNOLOGIE

On sait que les lentilles ophtalmiques sont soumises à différentes étapes de fabrication afin de leur apporter les propriétés ophtalmiques prescrites.

On connaît des procédés de fabrication de lentilles ophtalmiques qui comportent une étape de fourniture d'un palet brut ou semi-fini, c'est-à-dire un palet n'ayant aucune ou ayant une seule face dite finie (autrement dit une face qui définit une surface optique simple ou complexe).

Ces procédés comportent ensuite une ou plusieurs étapes d'usinage par tournage d'au moins une face du palet dite brute, pour obtenir une face dite finie, définissant la surface optique recherchée pour fournir les propriétés ophtalmiques (complexes ou non) prescrites au porteur de la lentille ophtalmique.

La fonction optique d'une lentille ophtalmique est apportée principalement par deux dioptres correspondant aux faces avant et arrière de la lentille ophtalmique. La topographie de la surface à réaliser dépend de la répartition de la fonction appliquée entre les faces avant et arrière de la lentille.

On entend par une ou plusieurs étapes d'usinage les étapes dites d'ébauche, de finition et de polissage (usinage par surfaçage).

L'étape d'ébauche permet, partant d'un palet brut ou semi-fini, de générer la courbure de la surface sur la ou les faces dites non finies du palet, tandis que l'étape de finition (appelée aussi doucissage) consiste à affiner le grain voire la précision des rayons de courbure des faces obtenues précédemment et permet de préparer (doucir) la ou les surfaces courbes générées pour l'étape de polissage. Cette étape de polissage est une étape de surfaçage de la ou des surfaces courbes doucies ou ébauchées, et permet de rendre la lentille ophtalmique transparente. Les étapes d'ébauche et de finition sont des étapes qui imposent l'épaisseur de la lentille finale et les rayons de courbures de la surface traitée indépendamment de l'épaisseur de l'objet initiale et de ses rayons de courbures initiales.

De manière générale, le temps d'usinage d'une face d'une lentille ophtalmique dépend de la machine utilisée, du matériau et de la complexité de la surface optique recherchée.

La vitesse d'usinage n'est pas sans effet sur la conformité de la surface optique réalisée à la surface voulue. Ainsi une très faible vitesse peut permettre d'assurer la conformité d'une surface mais elle en affectera la productivité. Au contraire, une grande vitesse permet d'augmenter la productivité mais peut affecter la conformité.

Généralement, des essais sont à mener pour les surfaces complexes afin de déterminer une vitesse d'usinage optimale, ce qui nuit à la productivité.

On connaît des demandes WO 2011/083234 et WO 2013/030495 des procédés pour déterminer une vitesse de rotation optimale pour l'usinage d'une telle lentille indépendamment de la matière de cette lentille, à partir de caractéristiques géométriques de la surface à réaliser.

Un autre exemple peut être vu dans le document EP 2 474 404 A1.

### OBJET DE L'INVENTION

L'invention vise à fournir un procédé de fabrication d'une lentille ophtalmique présentant au moins une fonction optique, différent d'un procédé d'usinage par tournage, qui soit particulièrement simple, commode et économique à mettre en œuvre.

L'invention a ainsi pour objet, sous un premier aspect conforme à la revendication 1, un procédé de fabrication d'une lentille ophtalmique présentant au moins une fonction optique, et comportant :
- l'étape de fabriquer de manière additive ladite lentille ophtalmique, par le dépôt d'une pluralité d'éléments de volume prédéterminés d'au moins un matériau ayant un indice de réfraction prédéterminé, conformément à une enveloppe géométrique cible ;
- l'étape de déterminer une enveloppe géométrique réelle au moins une fois au cours de la mise en œuvre de ladite l'étape de fabriquer de manière additive ; et
- l'étape de déclencher une action correctrice s'il existe dans une zone un écart supérieur à un seuil prédéterminé entre ladite enveloppe géométrique cible et ladite enveloppe géométrique réelle ;
caractérisé en ce que ladite étape de déclencher une action correctrice comporte :
- la mise en œuvre d'une première action correctrice s'il existe dans ladite zone, entre ladite enveloppe géométrique cible et ladite enveloppe géométrique réelle, un écart supérieur à un premier seuil prédéterminé et inférieur à un deuxième seuil prédéterminé ; et
- la mise en œuvre d'une deuxième action correctrice distincte de la première action correctrice s'il existe dans ladite zone, entre ladite enveloppe géométrique cible et ladite enveloppe géométrique réelle, un écart supérieur audit deuxième seuil prédéterminé ;
ladite première action correctrice comportant le dépôt, dit ajout en altitude, sur ladite zone, d'au moins un élément de volume prédéterminé additionnel sans remplacer l'enveloppe géométrique cible tandis que la deuxième action correctrice comporte la détermination d'une enveloppe géométrique cible modifiée remplaçant ladite enveloppe géométrique cible.

Avec ces caractéristiques, l'action correctrice mise en œuvre si besoin est particulièrement fine, ce qui permet d'obtenir une lentille ophtalmique de grande précision.

Le procédé selon l'invention permet de débuter la fabrication additive de la lentille sur la base d'une consigne de départ et, dans le cas où un écart est observé entre les enveloppes cible et réelle et en fonction de la valeur géométrique de cet écart, de poursuivre la fabrication additive soit en ajoutant un nombre déterminé d'éléments de volume prédéterminés en altitude sur la lentille et en continuant la fabrication avec la consigne de départ, soit en déterminant l'enveloppe géométrique cible modifiée et continuer la fabrication avec cette consigne modifiée.

Les techniques de fabrication additive sont particulièrement pertinentes pour répondre à l'objectif de l'invention.

Par fabrication additive on entend selon la norme internationale ASTM 2792-12, des techniques de fabrication comprenant un procédé de joindre des matériaux pour fabriquer des objets à partir de données de modélisation 3D (typiquement un fichier de CAO - conception assistée par ordinateur) usuellement couche par couche, en opposition aux méthodologies de fabrication soustractive, telle que l'usinage traditionnel.

Les technologies de fabrication additives consistent à fabriquer des objets en juxtaposant des éléments de matières solides en accord avec un agencement prédéfini sous forme numérique dans un fichier de CAO.

Ces éléments de volume élémentaires dénommés « voxels » peuvent être crées et juxtaposés selon une variété de principes techniques différents, par exemple, par dépose de gouttes de monomères photopolymérisables au moyen d'une buse d'impression, par photopolymérisation sélective avec une source UV à la surface d'un bain de monomère (technique de stéréolithographie), ou par fusion de poudre polymère (SLM, Selective Laser Melting ou SLS Selective Laser Sintering).

Les techniques de fabrication additive autorisent une très grande souplesse de définition géométrique des objets, mais soulèvent plusieurs problèmes dès lors que l'on s'intéresse à la fabrication de lentilles ophtalmiques transparentes qui ne diffusent pas la lumière et fournissent une prescription optique avec une géométrie de dioptre très précise sur chaque face de la lentille, ces dioptres pouvant être sphériques, ou pseudo-sphérique, ou sphéro-toriques, ou pseudo-sphéro-toriques.

On relève notamment les problèmes suivants :
- la construction voxel par voxel se prête mal à l'obtention de surfaces lisses qui sont nécessaires pour les applications optiques ;
- les techniques de construction additive rendent difficile la maitrise des caractéristiques dimensionnelles de l'élément produit avec la précision pour une application optique ; en particulier il est difficile d'obtenir la maitrise locale du rayon de courbure de la lentille avec une excellente précision.

On observera que l'invention tient compte de ces problèmes inhérents à la fabrication de manière additive afin de la rendre compatible pour la fabrication d'une lentille ophtalmique.

Le procédé de fabrication selon l'invention est particulièrement simple, commode et économique, surtout dans un contexte où la diversité des fonctions optiques à réaliser est importante (du fait de la personnalisation de ces fonctions optiques), nécessitant des procédés de fabrication rapides et flexibles.

On notera également que l'on entend par fonction optique d'une lentille, la réponse optique de cette lentille, c'est-à-dire une fonction définissant toute modification de propagation et de transmission d'un faisceau optique à travers la lentille concernée, quelle que soit l'incidence du faisceau optique entrant et quelle que soit l'étendue géométrique d'un dioptre d'entrée illuminée par le faisceau optique incident.

Plus précisément, dans le domaine ophtalmique, la fonction optique est définie comme la répartition des caractéristiques de puissance porteur et d'astigmatisme et des aberrations d'ordre supérieur associées à la lentille pour l'ensemble des directions du regard d'un porteur de cette lentille. Cela suppose bien entendu la prédétermination du positionnement géométrique de la lentille par rapport à l'œil du porteur.

Le procédé selon l'invention permet une fabrication additive précise de la lentille ophtalmique de façon particulièrement simple et commode, à partir de valeurs qu'il est possible d'obtenir par les outils de calcul standard en matière d'optique, ces outils de calcul permettant, à partir d'un fichier définissant la surface avec un nombre fini de points pour chacun desquels sont données ses coordonnées, par exemple dans un repère cartésien, de déterminer une enveloppe géométrique cible de la lentille, puis une enveloppe géométrique réelle de la lentille au cours de sa fabrication additive et, en fonction de l'écart géométrique entre ces enveloppes cible et réelle, de déclencher ou non une action correctrice.

Ainsi, dans le procédé selon l'invention, le suivi effectué au cours de la fabrication n'est pas le positionnement des outils de dépôt de matière, tels que des buses, mais l'enveloppe géométrique réelle de la lentille en cours de fabrication ; et, en cas de besoin, le déclenchement d'une action correctrice sur la lentille ophtalmique en cours de fabrication.

Selon des caractéristiques avantageuses, ladite action correctrice comporte le dépôt sur ladite zone d'au moins un élément de volume prédéterminé additionnel et/ou la détermination d'une enveloppe géométrique cible modifiée remplaçant ladite enveloppe géométrique cible.

On notera que l'enveloppe géométrique cible correspond à la consigne de départ de fabrication de la lentille tandis que l'enveloppe géométrique cible modifiée correspond à une consigne modifiée de fabrication de la lentille après détermination d'un écart supérieur à un seuil prédéterminé entre l'objectif (la lentille cible) et le réel (la lentille fabriquée).

Le dépôt d'au moins un élément de volume prédéterminé additionnel et/ou la détermination d'une enveloppe géométrique cible modifiée remplaçant l'enveloppe géométrique cible en cours, offre une excellente capacité de correction des éventuelles défauts s'étant produit, en comblant un éventuel déficit de matières et/ou en changeant en cours de fabrication la géométrie visée pour la lentille ophtalmique afin d'obtenir avec celle-ci, lorsqu'elle sera achevée, la fonction optique recherchée.

Ainsi, le facteur principal pris en compte au cours de la fabrication de la lentille ophtalmique n'est pas le respect de la géométrie fixée initialement, mais le respect de sa fonction optique, avec dans certain cas la lentille ophtalmique fabriquée qui a une géométrie différente de la géométrie fixée initialement.

Bien entendu, les corrections sont effectuées autant de fois que cela est approprié.

L'un des facteurs importants à prendre en compte pour déterminer si on effectue ou non une action correctrice est le moment auquel on se situe par rapport à l'achèvement de la fabrication de la lentille ophtalmique.

Selon des caractéristiques avantageuses, la deuxième action correctrice comporte en outre le dépôt, dit ajout en courbure, sur ladite zone, d'au moins un élément de volume prédéterminé additionnel.

Ainsi, suivant les valeurs de seuil, l'action correctrice peut être un ajout en altitude, un ajout en courbure ou une simple modification de l'enveloppe géométrique cible sans ajout de matière. Selon des caractéristiques avantageuses :
- ladite étape de déterminer une enveloppe géométrique réelle comporte l'étape de déterminer au moins une valeur géométrique représentative de la courbure moyenne sur ladite zone ; et
- pour déterminer ledit écart dans ladite zone, ledit procédé comporte l'étape de comparer ladite au moins une valeur géométrique représentative de la courbure moyenne à une valeur géométrique représentative de la courbure moyenne cible sur ladite zone et déterminée à partir de ladite enveloppe géométrique cible.

Dans le procédé selon l'invention, la détermination d'un tel écart est réalisée à partir de calculs permettant d'obtenir des valeurs géométriques représentatives des courbures moyennes en différents points de la lentille en cours de fabrication additive. La prise en compte de telles valeurs relatives aux courbures moyennes sur la surface permet de définir l'enveloppe géométrique de la lentille et rend particulièrement précis le procédé selon l'invention, puisqu'il s'agit de valeurs parfaitement représentatives de la difficulté qu'une surface présente à être réalisée, pour obtenir la fonction optique désirée. En effet, ces valeurs géométriques peuvent permettre de calculer notamment la sphère géométrique moyenne en un point de la surface de la lentille ophtalmique, qui s'exprime en dioptrie et qui est représentative au moins en partie de cette fonction optique.

Ainsi, le procédé selon l'invention permet, par des calculs relativement simples, basés sur des outils conventionnels de calcul d'une surface optique, de déterminer les éventuelles erreurs de fabrication (écarts) sur la surface et de déterminer la manière de les corriger par fabrication additive.

Bien entendu, c'est sur la base d'un étalonnage, aisé à réaliser par un nombre d'essais raisonnable, que sont fixées les règles de détermination de la manière de corriger (autrement dit les seuils), à partir du résultat de la comparaison des valeurs géométriques représentatives des courbures moyennes cible et cible modifiée.

Selon des caractéristiques avantageuses du procédé selon l'invention :
- ladite étape de déterminer au moins une valeur géométrique représentative de la courbure moyenne comporte l'étape de mesurer au moins un couple de rayons de courbure associé à un point déterminé sur ladite zone ;
- ladite étape de déterminer au moins une valeur géométrique représentative de la courbure moyenne comporte en outre l'étape de déterminer la valeur géométrique de la courbure moyenne audit point déterminé de ladite zone et/ou une valeur représentative de la plus grande différence de valeurs géométriques de courbure moyenne sur ladite zone, à partir de valeurs géométriques mesurées dudit au moins un couple de rayons de courbure ;
- ladite étape de déterminer au moins une valeur géométrique représentative de la courbure moyenne comporte en outre l'étape de déterminer des caractéristiques géométriques réelles de ladite lentille ophtalmique, définissant ladite enveloppe géométrique réelle, à partir de valeurs géométriques mesurées dudit au moins un couple de rayons de courbure et/ou de ladite valeur géométrique de courbure moyenne déterminée sur ladite zone et/ou de ladite valeur représentative de la plus grande différence de valeurs géométriques de courbure moyenne sur ladite zone ; et/ou
- ladite zone présente un profil de courbure cible achevé.

L'invention a aussi pour objet, sous un deuxième aspect conforme à la revendication 9, une machine de fabrication additive configurée pour fabriquer une lentille ophtalmique et comportant une unité de contrôle et de commande pourvue d'éléments systémiques configurés pour exécuter un programme d'ordinateur comportant des instructions configurées pour mettre en œuvre chacune des étapes du procédé tel que décrit ci-dessus.

Selon des caractéristiques préférées, simples, commodes et économiques, la machine selon l'invention comporte en outre un dispositif de mesure configuré pour mesurer des valeurs géométriques représentatives de la courbure moyenne au moins en un point prédéterminé d'au moins une zone de ladite lentille ophtalmique.

### BREVE DESCRIPTION DES DESSINS

On va maintenant poursuivre l'exposé de l'invention par la description d'un exemple de réalisation, donnée ci-après à titre illustratif et non limitatif, en référence aux dessins annexés sur lesquels :
- la figure 1 représente schématiquement une machine de fabrication additive configurée pour réaliser une lentille ophtalmique ;
- les figures 2 et 3 représentent schématiquement, respectivement en section et en vue de dessus, la lentille ophtalmique en cours de fabrication ;
- la figure 4 représente schématiquement différentes étapes de fabrication de la lentille ophtalmique à l'aide de la machine illustrée sur la figure 1 ;
- la figure 5 est un schéma-blocs illustrant différentes étapes de fonctionnement d'un procédé de fabrication d'une lentille ophtalmique, dont les étapes illustrées sur la figure 4 ; et
- les figures 6 à 8 sont des schéma-blocs montrant respectivement en détail certaines étapes de fonctionnement illustrées sur la figure 5.

### DESCRIPTION DETAILLEE D'UN EXEMPLE DE REALISATION

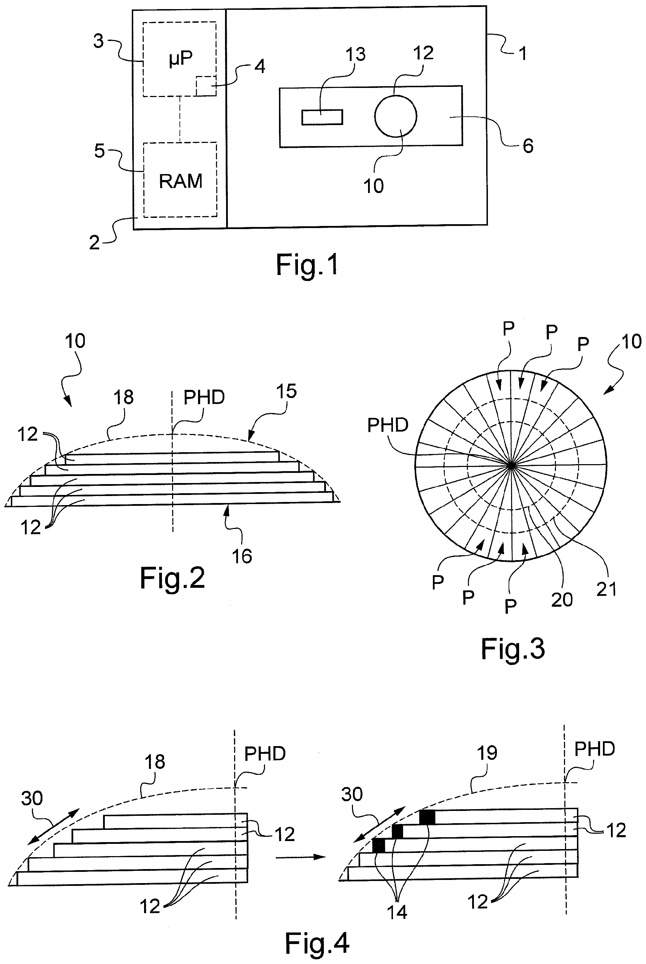

La figure 1 illustre une machine de fabrication additive 1 d'une lentille ophtalmique 10, ici une machine d'impression tridimensionnelle à commande numérique.

La commande numérique désigne l'ensemble des matériels de la machine de fabrication additive 1 configuré pour donner des instructions de mouvement à tous les organes que comporte cette machine.

La machine de fabrication additive 1 est ici configurée pour déposer, par juxtaposition, une pluralité d'éléments de volume prédéterminés formant des couches superposées (autrement dit en couche par couche), d'au moins un matériau sur un support de fabrication 12 pour former la lentille ophtalmique 10.

Cette lentille ophtalmique 10 est par exemple progressive et possède en outre des composantes torique et prismatique.

Chaque élément de volume prédéterminé est défini par une composition prédéterminée et une taille prédéterminée.

Comme il s'agit ici de fabrication additive et en particulier d'impression tridimensionnelle, on parle également d'élément volumétrique, ou d'élément de volume, appelé aussi voxel (représentatif d'un pixel en trois dimensions).

Cette lentille ophtalmique 10 est donc portée par le support de fabrication 12.

On notera que ce support de fabrication 12 est un support prédéterminé de la machine de fabrication additive 1 et donc que ses caractéristiques géométriques sont connues et regroupées dans un fichier qui est stocké ou chargé dans une première unité de contrôle et de commande 2 de la machine de fabrication additive 1.

L'ensemble des matériels de la machine de fabrication additive 1 est en outre configuré pour donner des instructions de mouvement, de manipulation et de contrôle de matériaux et de dispositifs de polymérisation que comporte la machine de fabrication additive 1.

Le support de fabrication 12 de la machine de fabrication additive 1 comporte un corps pourvu d'une surface de fabrication qui présente ici une forme générale plane (non représentée).

La machine de fabrication additive 1 comporte une buse ou une rampe de buses 13 ainsi que l'unité de contrôle et de commande 2, laquelle est pourvue d'un système de traitement de données comportant un microprocesseur 3 muni d'une mémoire 4, notamment non volatile, lui permettant de charger et stocker un logiciel, autrement dit un programme d'ordinateur qui, lorsqu'il est exécuté dans le microprocesseur 3, permet la mise en œuvre d'un procédé de fabrication additive. Cette mémoire non volatile 4 est par exemple de type ROM (« *Read-Only Memory* » en anglais).

L'unité 2 comporte en outre une mémoire 5, notamment volatile, permettant de mémoriser des données durant l'exécution du logiciel et la mise en œuvre du procédé de fabrication additive.

Cette mémoire volatile 5 est par exemple de type RAM ou EEPROM (respectivement « *Random Access Memory* » et « *Electrically Erasable Programmable Read-Only Memory* » en anglais).

La machine de fabrication additive 1 comporte de plus une ouverture 6, ici vitrée, configurée pour accéder à la lentille ophtalmique 10 fabriquée de manière additive par cette machine 1 sur le support de fabrication 12 de cette dernière.

La machine de fabrication additive 1 comporte en outre un dispositif de mesure (non représenté) configuré pour mesurer des valeurs géométriques représentatives de la courbure moyenne Cm au moins en un point déterminé d'au moins une zone P (figure 3) de ladite lentille ophtalmique 10, lors de sa fabrication additive.

Ce dispositif de mesure est pourvu d'une pupille de mesure 30 (figure 4) ayant un diamètre prédéterminé. On notera que ce dispositif de mesure peut par exemple fonctionner selon un principe connu de déflectométrie.

On notera que pour fabriquer de manière additive la lentille ophtalmique 10, on a besoin de connaître précisément certains paramètres de fabrication additive, tels que la vitesse d'avance de la ou des buses 13, l'énergie et la source d'énergie mises en œuvre, ici une source émettant dans l'ultra-violet pour la machine d'impression tridimensionnelle mais il pourrait s'agir d'un laser dans le cas d'une machine de stéréolithographie ou encore d'une énergie de chauffe dans le cas d'un dépôt à fil tendu appelé aussi extrusion par fil thermoplastique.

On a aussi besoin de connaître précisément le ou les matériaux utilisés et leur état, ici sous forme de photopolymère liquide.

On a aussi besoin de connaître précisément la ou les fonctions optiques simples ou complexes prescrites à la lentille ophtalmique 10, fonction optique qui est caractérisée par une géométrie définie dans un fichier de fabrication caractéristique des propriétés optiques simples ou complexes de la lentille ophtalmique 10. Selon une variante, on a aussi besoin de connaitre des paramètres se personnalisation du porteur, et /ou des paramètres de la géométrie de la monture dédié à recevoir la lentille ophtalmique 10, pour ajuster la fonction optique de la lentille ophtalmique à ses conditions d'utilisation finales.

On rappelle que par fonction optique d'une lentille ophtalmique, on entend la réponse optique de cette lentille, c'est-à-dire une fonction définissant toute modification de propagation et de transmission d'un faisceau optique à travers la lentille concernée, quelle que soit l'incidence du faisceau optique entrant et quelle que soit l'étendue géométrique d'un dioptre d'entrée illuminée par le faisceau optique incident.

Plus précisément, dans le domaine ophtalmique, la fonction optique est définie comme la répartition des caractéristiques de puissance porteur et d'astigmatisme, des déviations prismatiques, et des aberrations d'ordre supérieur associées à la lentille pour l'ensemble des directions du regard d'un porteur de cette lentille. Cela suppose bien entendu la prédétermination du positionnement géométrique de la lentille par rapport à l'œil du porteur.

On notera également que la puissance porteur est une manière de calculer et d'ajuster la puissance de la lentille ophtalmique, qui se différencie de la puissance frontofocomètre. Le calcul en puissance porteur assure que la puissance perçue par le porteur (c'est-à-dire la puissance du faisceau de lumière qui rentre dans l'œil), une fois la lentille positionnée dans la monture et portée par le porteur, corresponde à la puissance prescrite. En général, en tout point du verre, notamment au niveau des points de contrôle de vision de loin et de vision de près, pour un verre progressif, la puissance mesurée avec un frontofocomètre se différencie de la puissance porteur. Cependant, la puissance porteur au niveau du centre optique d'une lentille unifocale est généralement proche de la puissance observée avec un frontofocomètre positionné en ce point.

Les figures 2 et 3 montrent, schématiquement, la lentille ophtalmique 10 en cours de fabrication additive tandis que la figure 4 montre, aussi schématiquement, différentes étapes de fabrication de cette lentille 10.

La lentille ophtalmique 10 présente un corps pourvu d'une première face 15, dite face avant, qui est ici convexe ainsi qu'une deuxième face 16, dite face arrière, qui est ici sensiblement plane.

On notera que les première et deuxième faces 15 et 16 définissent deux dioptres qui vont caractériser la fonction optique de la lentille ophtalmique 10.

Cette deuxième face 16 est plane puisque c'est celle qui se trouve en regard de la surface de fabrication sur laquelle la lentille ophtalmique 10 est fabriquée de manière additive.

La lentille ophtalmique 10 comporte une tranche périphérique raccordant la première face 15 à la deuxième face 16.

La lentille ophtalmique 10 est ici formée par une pluralité d'éléments de volume prédéterminés qui sont juxtaposés et superposés pour former une pluralité de couches superposées d'un matériau 12.

Cette pluralité de couches superposées forme le corps ensemble avec la première face 15 et la deuxième face 16 de cette lentille ophtalmique 10.

On observera que les couches superposées du premier matériau 12 présentent ici des longueurs différentes de manière à former les première et deuxième faces 15 et 16 de cette lentille ophtalmique 10.

On observera que certaines technologies de fabrication additive n'ont qu'une notion relative de "couches", une couche n'étant alors qu'un ensemble de voxels artificiellement déposés lors d'un même passage de buses ou d'un même masquage. Cependant, l'enseignement de la présente invention se retranscrit aisément à ces technologies.

Ces couches présentent ici chacune une épaisseur sensiblement constante sur la longueur et elles présentent toutes sensiblement la même épaisseur. On observera que certaines technologies de fabrication additive peuvent prévoir des couches avec des épaisseurs variables au long de la couche. Cependant, l'enseignement de la présente invention se retranscrit aisément à ces technologies.

On notera que cette équi-épaisseur est ici obtenue grâce à la diffusion contrôlée et commandée, par la buse ou la rampe de buses 13 de la machine de fabrication additive 1, d'une quantité déterminée d'éléments de volume prédéterminés pour chaque couche superposée du matériau 12.

On notera que le matériau 12 est ici un polymère acrylique, et plus précisément un photopolymère, par exemple un photopolymère tel que le produit commercialisé par la société OBJET Ltd, sous la marque VeroClear™.

On notera que la fabrication additive de la lentille ophtalmique 10 peut nécessiter, en plus du dépôt de la pluralité de couches successives et superposées, une ou plusieurs étapes de photo-polymérisation. Les étapes de photo-polymérisations peuvent avoir lieu au dépôt de chaque d'élément de volume, de façon globale après le passage de la buse et/ou de la rampe de buse ou après le dépôt de chaque couche de matériau. On notera d'ailleurs, comme on le verra ci-après plus en détail, que la polymérisation de la lentille ophtalmique 10 peut ne pas être complètement terminée à la fin de l'étape de fabrication additive de cette lentille ophtalmique 10.

La figure 2 montre la lentille ophtalmique 10 seulement partiellement fabriquée, et plus particulièrement, sa première face 15 n'est pas achevée tandis que sa deuxième face 16 est achevée.

On observera que dans le corps de la lentille ophtalmique 10 est représentée une ligne en pointillés qui définit la forme, en section, des première et deuxième faces 15 et 16 de la lentille ophtalmique 10.

Cette ligne en pointillés correspond à une enveloppe géométrique dite cible 18 (aussi référencée Ec) de la lentille ophtalmique 10 à fabriquer.

Cette enveloppe géométrique cible 18 est représentative d'une consigne cible de fabrication de la lentille ophtalmique 10.

La portion incurvée de la ligne en pointillés est particulièrement visible puisque cette dernière définit la première face 15 de la lentille ophtalmique 10, laquelle première face 15 n'est ici pas achevée.

Sur cette portion incurvée de la ligne en pointillés est représenté le point le plus haut du dioptre que doit définir la première face 15, lequel point est référencé PHD sur les figures 2 et 3.

La figure 3 montre une pluralité de zones sur le dessus de la lentille ophtalmique 10 illustrée sur la figure 2, dont certaines sont référencées P.

Les zones P sont représentatives de zones de la lentille ophtalmique 10 dont la fabrication « cible » additive est achevée. En d'autres termes, les zones P présentent chacune un profil de courbure cible dit achevé tandis que les autres zones présentent chacune un profil de courbure cible dit non achevé.

La surface de la lentille ophtalmique 10 est ainsi caractérisée par échantillonnage par zones (un échantillon correspondant à une zone « achevée » ou « non achevée »).

On observera que sur la surface de la lentille ophtalmique 10 sont également représentés deux cercles 20 et 21 concentriques centrés sur le point PHD (ici le centre de la lentille ophtalmique 10).

Ces deux cercles 20 et 21 sont situés entre la périphérie et le centre de la lentille ophtalmique 10 et présentent chacun un diamètre prédéterminé.

La figure 4 montre, schématiquement, différentes étapes d'un procédé de fabrication de la lentille ophtalmique 10, illustrées seulement partiellement.

Sur la gauche de la figure 4 est représenté un détail de la lentille ophtalmique 10 illustrée sur la figure 2, qui est en cours de fabrication additive à l'aide de la machine de fabrication additive de la figure 1, la fabrication se déroulant selon la consigne cible de fabrication (aussi appelée consigne de départ) qui définit l'enveloppe géométrique cible 18 de la lentille ophtalmique 10.

On notera que l'enveloppe géométrique cible 18 de la lentille ophtalmique 10 est définie à partir de caractéristiques géométriques cibles, et caractérise des valeurs géométriques cibles représentatives des courbures moyennes cibles en des points déterminés de la surface de la lentille ophtalmique 10.

On observera à gauche sur la figure 4 qu'il existe un écart géométrique entre la portion incurvée de la ligne en pointillés représentant l'enveloppe géométrique cible 18 et la lentille ophtalmique 10 réellement fabriquée de manière additive, lequel écart géométrique est représentatif d'une erreur de fabrication.

En effet, sur ce détail sont représentées partiellement cinq couches superposées de matériau 12, dont on voit les extrémités au niveau de la première face. Entre deux couches immédiatement superposées dont l'épaisseur (ou la hauteur) est prédéterminée, est formée une marche ayant une longueur. On observe que les deux marches au plus près de la deuxième face 16 s'étendent jusqu'à la portion incurvée de la ligne en pointillés représentant l'enveloppe géométrique cible 18, tandis que les trois marches supérieures (qui s'éloignent de la deuxième face et qui se rapprochent de la première face) sont à distance de cette portion incurvée.

L'écart géométrique est déterminé grâce à des mesures effectuées sur les zones P de la lentille ophtalmique 10 et à une comparaison de ces mesures avec les caractéristiques cibles (voir plus en détail ci-après).

En fonction de l'écart géométrique déterminé, une enveloppe géométrique cible modifiée 19 (à droite sur la figure 4) de la lentille ophtalmique 10 est ensuite déterminée à partir de caractéristiques géométriques cibles modifiées (voir plus en détail ci-après) et une consigne cible modifiée de fabrication en est déduite.

Sur la droite de la figure 4 est représenté le détail de la lentille ophtalmique 10 illustrée sur la figure 3, toujours en cours de fabrication additive à l'aide de la machine de fabrication additive de la figure 1, la fabrication se déroulant cette fois ci selon la consigne cible modifiée de fabrication.

En d'autres termes, la lentille ophtalmique 10 est fabriquée de manière additive selon une consigne de fabrication corrigée déterminée à partir des mesures effectuées sur les zones P, pour obtenir la fonction optique souhaitée.

On observera ici qu'un nombre déterminé d'éléments de volume prédéterminés 14 est ajouté sur les trois marches supérieures, suivant la consigne cible modifiée de fabrication, de sorte que chacune des marches visibles à droite sur la figure 4 s'étend jusqu'à la portion incurvée de la ligne en pointillés représentant l'enveloppe géométrique cible modifiée 19.

La mise en œuvre de ces étapes de fabrication sur la lentille ophtalmique 10 durant sa fabrication dans la machine 1 permet d'obtenir la lentille ophtalmique 10 présentant la fonction optique, ici complexe, qui lui est prescrite.

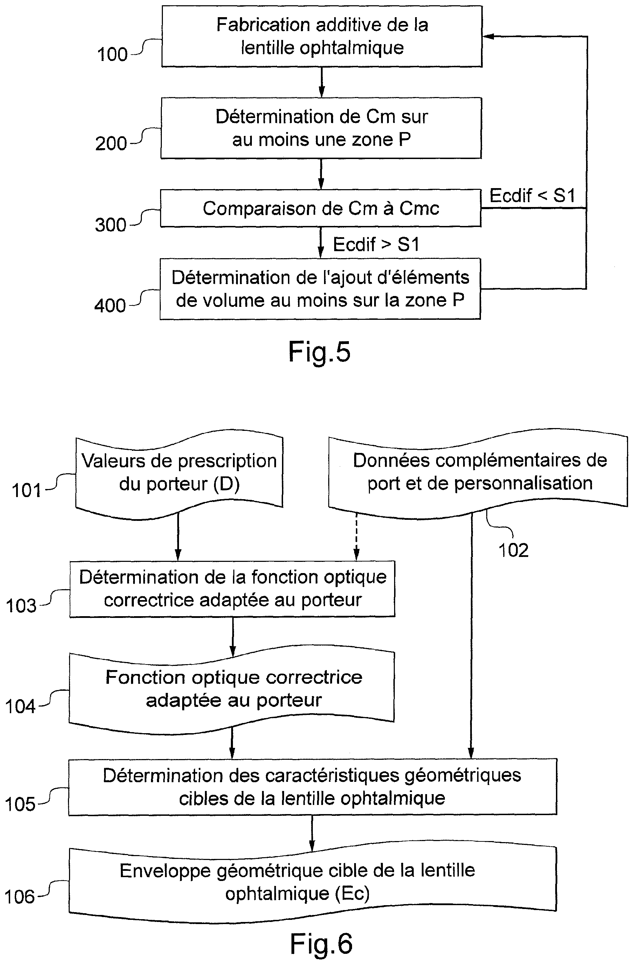

On va maintenant décrire plus en détail en référence aux figures 5 à 8 un procédé de fabrication de cette lentille ophtalmique 10.

Le procédé de fabrication comporte l'étape 100 de fabriquer de manière additive la lentille ophtalmique 10 avec la machine de fabrication additive 1, selon une géométrie cible déterminée représentée par l'enveloppe géométrique cible 18.

L'unité de contrôle et de commande 2 de la machine de fabrication additive 1 est donc configurée pour construire la lentille ophtalmique 10 par fabrication additive suivant des caractéristiques géométriques cibles déterminées.

L'unité 2 est en outre configurée pour déterminer à l'étape 200 au moins une valeur géométrique représentative de la courbure moyenne Cm en au moins un point déterminé d'une zone P fabriquée de manière additive et présentant un profil cible de courbure achevé.

L'unité 2 est en outre configurée pour comparer à l'étape 300 la valeur géométrique représentative de la courbure moyenne Cm déterminée à une valeur géométrique représentative de la courbure moyenne cible Cmc en ce même point sur la même zone P, cette dernière valeur géométrique étant déterminée à partir de l'enveloppe géométrique cible de la lentille ophtalmique 10 suivant laquelle elle est fabriquée.

La comparaison à l'étape 300 fournit un résultat représentatif d'un écart de courbure moyenne Ecdif (définissant un écart d'enveloppe géométrique) entre l'objectif (la lentille cible) et le réel (la lentille fabriquée).

Si le résultat de la comparaison est que l'écart de courbure moyenne Ecdif est inférieur à un premier seuil prédéterminé S₁, alors la fabrication additive de la lentille ophtalmique 10 se poursuit avec la consigne cible de fabrication.

Si le résultat de la comparaison est que l'écart de courbure moyenne Ecdif est supérieur au premier seuil prédéterminé S₁, alors l'unité 2 est configurée pour déterminer à l'étape 400 le nombre d'éléments de volume prédéterminés 14 à ajouter à la zone P, et s'il faut les ajouter en courbure ou en altitude sur cette zone P.

A cette même étape 400, lorsqu'il est déterminé d'ajouter un nombre déterminé d'éléments de volume prédéterminés en courbure, l'unité 2 est en outre configurée pour déterminer l'enveloppe géométrique cible modifiée 19 de la lentille ophtalmique 10 (voir ci-après).

La fabrication additive de la lentille ophtalmique 10 se poursuit donc soit avec la consigne cible de fabrication, soit avec la consigne de fabrication corrigée, en fonction du résultat de la comparaison.

Les étapes de procédé décrites ci-dessus sont aussi mises en œuvre sur d'autres zones P de la lentille ophtalmique 10 et au moins sur certaines zones P déjà corrigées afin de contrôler que l'ajout effectué est représentatif de la correction déterminée et par conséquent que l'enveloppe géométrique réelle de lentille ophtalmique 10 corresponde à l'enveloppe géométrique cible modifiée.

On notera que pendant la fabrication additive de la lentille ophtalmique 10 ou lorsque cette dernière est achevée, le procédé comporte optionnellement une étape (non représentée) d'irradier la lentille ophtalmique 10 obtenue. Cette étape consiste à terminer la polymérisation de la lentille ophtalmique 10.

Le procédé comporte optionnellement une étape (non représentée) de traiter la face avant et/ou la face arrière de la lentille ophtalmique 10 ainsi obtenue par fabrication additive, pour y ajouter un ou plusieurs revêtements prédéterminés, par exemple un anti-buée et/ou un anti-reflets et/ou une teinte et/ou un revêtement photochromique et/ou anti-rayures, etc.

La figure 6 illustre des étapes du procédé de fabrication et plus précisément des étapes pour la détermination de l'enveloppe géométrique cible de la lentille ophtalmique 10 et par conséquent de la consigne cible de fabrication de cette dernière.

L'unité 2 est configurée pour recevoir à l'étape 101 un fichier comportant des valeurs de prescription d'un porteur de la lentille ophtalmique 10 à fabriquer.

Ces valeurs de prescription du porteur sont généralement exprimées en dioptrie (D).

L'unité 2 est en outre configurée pour recevoir à l'étape 102 des données complémentaires de port et de personnalisation, liées à la fois au porteur, à une monture prévue pour recevoir la lentille ophtalmique 10 et à la prescription.

On notera que ces données complémentaires de port et de personnalisation correspondent par exemple à des valeurs géométriques qui caractérisent notamment la monture et le comportement visuel du porteur. Il peut s'agir par exemple d'une distance entre l'œil et la lentille et/ou d'une position du centre de rotation de l'œil, et/ou d'un coefficient œil-tête, et/ou d'un angle pantoscopique et/ou d'un galbe de la monture.

L'unité 2 est configurée pour déterminer à l'étape 103 une fonction optique correctrice adaptée au porteur à partir des valeurs de prescription porteur et des données complémentaires de port et de personnalisation reçues aux étapes respectives 101 et 102, et en fonction du positionnement géométrique de la lentille 10 par rapport à l'œil du porteur.

Cette fonction optique correctrice adaptée au porteur correspond à la fonction optique cible de la lentille ophtalmique 10 à fabriquer.

On notera que la détermination de la fonction optique correctrice adaptée au porteur peut être effectuée par exemple à l'aide d'un logiciel de tracé de rayons, lequel permet de déterminer la puissance porteur et l'astigmatisme résultant de la lentille dans les conditions de port de cette dernière. Une optimisation peut être effectuée en suivant des méthodes d'optimisation optique bien connues.

On notera également que l'étape 102 est optionnelle et donc que la fonction optique correctrice adaptée au porteur peut être déterminée par l'unité 2 à l'étape 103, seulement à partir des valeurs de prescription reçues à l'étape 101, et en fonction du positionnement géométrique de la lentille ophtalmique 10 par rapport à l'œil du porteur.

L'unité 2 est configurée pour générer à l'étape 104 un fichier appelé « fonction optique » qui caractérise cette fonction optique correctrice adaptée au porteur déterminée à l'étape 103.

On notera que ce fichier « fonction optique » est un fichier dit de surface qui est pourvu par exemple de caractéristiques géométriques sous la forme de coordonnées x, y, z, θ, en un nombre fini de points, ou d'une fonction de surface z = f(x,y) définissant chaque face, de caractéristiques liées à un indice de réfraction, de diverses distances et angles tels que ceux mentionnés plus haut.

On notera que la fonction optique correctrice adaptée au porteur peut, à la place d'être déterminée par l'unité 2 à l'étape 103, être directement reçue par cette unité 2 sous forme d'un tel fichier.

L'unité 2 est configurée pour déterminer, à l'étape 105, les caractéristiques géométriques cibles de la lentille ophtalmique 10 à fabriquer, à partir du fichier « fonction optique » généré à l'étape 104 et à partir des données complémentaires de port et de personnalisation reçues à l'étape 102, et en particulier celles liées à la monture prévue pour recevoir la lentille ophtalmique 10.

L'unité 2 est configurée pour générer à l'étape 106 un fichier appelé « géométrie cible » qui caractérise les caractéristiques géométriques de la lentille ophtalmique 10 à fabriquer, déterminées à l'étape 105.

On notera que ce fichier « géométrie cible » est également un fichier dit de surface qui est pourvu par exemple de caractéristiques géométriques sous la forme de coordonnées x, y, z, θ, en un nombre fini de points, ou d'une fonction de surface z = f(x,y) définissant chaque face, de caractéristiques liées à un indice de réfraction, de diverses distances et angles tels que ceux mentionnés plus haut. Le fichier « géométrie cible » est représentatif en fait à la fois de la fonction optique et de la géométrie à apporter à la lentille ophtalmique 10.

On notera que l'unité 2 est en outre configurée pour recevoir (étape non représentée) un fichier comportant des caractéristiques liées à l'indice de réfraction du matériau 12 utilisé pour la fabrication additive de la lentille ophtalmique 10.

On notera également que l'unité 2 est configurée pour déterminer (étape non représentée), optionnellement, un retrait dimensionnel ainsi qu'une variation d'indice de la lentille ophtalmique 10. Il s'agit ici d'évolutions possibles ultérieures, d'une part, de l'indice de réfraction du matériau 12 dans lequel est fabriquée la lentille ophtalmique 10 et, d'autre part, de la géométrie (retrait dimensionnel) de la lentille ophtalmique 10.

On notera que la géométrie de la lentille ophtalmique 10 est déterminée de sorte à être directement adaptée au contour de la monture dans laquelle la lentille 10 est configurée pour être montée. En variante, le contour de la lentille 10 définie dans ce fichier ne correspond pas au contour de la monture et une opération de détourage est nécessaire.

L'unité 2 est en outre configurée pour déterminer (étape non représentée) la consigne de fabrication de la lentille ophtalmique 10, à partir des caractéristiques que comporte le fichier « géométrie cible » et éventuellement des caractéristiques relatives au matériau.

L'unité 2 est configurée pour générer (étape non représentée) le fichier de fabrication correspondant à la consigne de fabrication de la lentille ophtalmique 10 sur le support de fabrication 12 de la machine de fabrication additive 1 (dans un repère connu de cette machine).

Ce fichier « consigne » est similaire au fichier de géométrie cible de la lentille ophtalmique généré à l'étape 106, si ce n'est qu'il reflète une description transcrite de la géométrie souhaitée de cette lentille ophtalmique 10 à fabriquer, avec en pratique, un agencement des éléments de volume prédéterminés du ou des matériaux ; incluant une orientation angulaire déterminée de la lentille ophtalmique 10 sur le support de fabrication 12 pour sa fabrication et des modifications liées à un éventuel retrait dimensionnel ainsi qu'à une éventuelle variation d'indice de la lentille ophtalmique 10.

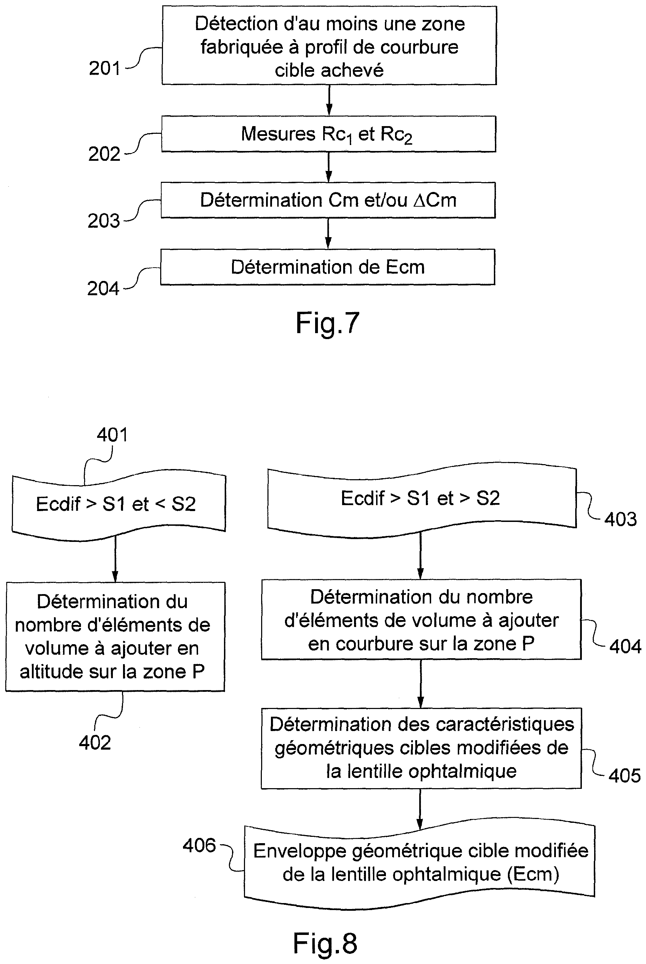

La figure 7 illustre d'autres étapes du procédé de fabrication et plus précisément des étapes pour la détermination de la courbure moyenne en un point déterminé d'une zone P.

L'unité 2 est configurée pour détecter à l'étape 201 une zone P fabriquée de manière additive et présentant un profil de courbure cible achevé.

L'unité 2 est en outre configurée pour mesurer à l'étape 202 au moins un couple de rayons de courbure Rci, Rc₂ associé à un ou plusieurs points déterminés sur la zone P.

Cette étape 202 de mesure est réalisée à l'aide du dispositif de mesure pourvu d'une pupille de mesure 30 de la machine de fabrication additive 1, par exemple par déflectométrie.

La pupille de mesure 30 est par exemple déplacée en partant d'un bord de la zone P au niveau de la tranche la lentille ophtalmique 10 jusqu'au point PHD.

En variante, la pupille de mesure 30 peut par exemple être déplacée en partant du bord de la zone P au niveau de la tranche la lentille ophtalmique 10 jusqu'à l'un des deux cercles 20 et 21, ou bien déplacée seulement entre les deux cercles 20 et 21, ou encore déplacée à partir d'un des cercles 20 et 21 jusqu'au point PHD.

On notera que la zone P présente un contour définissant un espace qui, à l'endroit le plus étroit, est au moins aussi grand que la pupille de mesure 30.

On notera également que la zone P peut, en variante, être représentative d'une pastille (correspondant à un échantillon) définie sur la surface de la lentille ophtalmique 10 et présentant un diamètre prédéterminé au moins aussi grand que celui de la pupille de mesure.

L'unité 2 est configurée pour déterminer à l'étape 203 une valeur géométrique de courbure moyenne Cm en chaque point déterminé et/ou une valeur représentative de la plus grande différence de valeurs géométriques de courbure moyenne ΔCm sur la zone P, à partir des valeurs géométriques mesurées des rayons de courbure Rci, Rc₂.

Les étapes 202 et 203 sont par exemple mises en œuvre sur une pluralité de points déterminés sur une pluralité de zones P.

L'unité 2 est en outre configurée pour déterminer à l'étape 204, à partir des valeurs géométriques de courbure moyenne Cm aux point déterminés sur les zones détectées et/ou des valeurs représentatives de la plus grande différence de valeurs géométriques de courbure moyenne ΔCm sur les zones P détectées, les caractéristiques géométriques réelles des zones P de la lentille ophtalmique 10 en cours de fabrication additive, et par conséquent l'enveloppe géométrique réelle (au moins partielle) de cette lentille ophtalmique 10.

La figure 8 illustre d'autres étapes du procédé de fabrication et plus précisément des étapes pour la détermination du nombre d'éléments de volume prédéterminés 14 et, le cas échéant, pour la détermination de l'enveloppe géométrique cible modifiée 19 (aussi référencée Ecm) de la lentille ophtalmique 10 en cours de fabrication additive.

L'unité 2 est configurée pour recevoir un fichier comportant le résultat de la comparaison effectuée à l'étape 300 aux étapes 401 et 403 en fonction du résultat de cette comparaison.

Si le résultat de la comparaison est que l'écart de courbure moyenne Ecdif est supérieur au premier seuil prédéterminé S₁ et inférieur à un deuxième seuil prédéterminé S₂ (étape 401), l'unité est en outre configurée pour déterminer, à l'étape 402, le nombre d'éléments de volume prédéterminés 14 à ajouter en altitude sur la ou les zones P de la lentille ophtalmique 10 en cours de fabrication.

Les seuils S1 et S2 dépendent de la zone P concernée et de la fonction optique à obtenir par la lentille ophtalmique, les méthodes de calcul à la disposition de l'homme du métier lui permettant d'ajouter ces seuils.

Par exemple, le seuil S1 est compris entre 0,06 dioptries et 0,12 dioptrie ; et le seuil S2 est plus grand que 0,1 dioptrie ; étant entendu que le seuil S2 est plus grand que le seuil S1.

L'unité 2 est également configurée pour lancer l'ajout en altitude par fabrication additive du nombre déterminé d'éléments de volume prédéterminés sur la ou les zones P, puis poursuivre la fabrication additive de la lentille ophtalmique 10 avec la consigne cible de fabrication (consigne de départ).

Si le résultat de la comparaison est que l'écart de courbure moyenne Ecdif est supérieur au premier seuil prédéterminé S₁ et aussi supérieur au deuxième seuil prédéterminé S₂ (étape 403), l'unité est en outre configurée pour déterminer, à l'étape 404, le nombre d'éléments de volume prédéterminés 14 à ajouter en courbure sur la ou les zones P de la lentille ophtalmique 10 en cours de fabrication.

L'unité 2 est en outre configurée pour déterminer à l'étape 405 des caractéristiques géométriques cibles modifiées de la lentille ophtalmique 10 en cours de fabrication, à partir des caractéristiques géométriques cibles, des caractéristiques géométriques réelles et du nombre d'éléments de volume prédéterminés à ajouter, déterminés aux étapes 105, 202, 203, 204 et 404.

A cette même étape 405 est déterminée l'enveloppe géométrique cible modifiée de la lentille ophtalmique 10 à partir des caractéristiques géométriques cibles modifiées de la lentille ophtalmique 10.

On notera que l'étape 405 de détermination peut éventuellement prendre en considération les caractéristiques liées à l'indice de réfraction du matériau 12 utilisé pour la fabrication additive de la lentille ophtalmique 10 et un éventuel retrait dimensionnel ainsi qu'une variation d'indice de la lentille ophtalmique 10 (comme indiqué plus haut pour la détermination de l'enveloppe géométrique cible).

L'unité 2 est en outre configurée pour générer à l'étape 406 un fichier qui caractérise les caractéristiques géométriques cibles modifiées, appelé « enveloppe géométrique cible modifiée ».

On notera que ce fichier « enveloppe géométrique cible modifiée » est également un fichier dit de surface qui est pourvu par exemple de caractéristiques géométriques sous la forme de coordonnées x, y, z, θ, en un nombre fini de points, ou d'une fonction finie de surface z = f(x, y) définissant chaque face, de caractéristiques liées à un indice de réfraction, de diverses distances et angles tels que ceux mentionnés plus haut. Le fichier « enveloppe géométrique cible modifiée» est représentatif en fait à la fois de la fonction optique et de la géométrie à apporter à la lentille ophtalmique 10.

L'unité 2 est en outre configurée pour déterminer (étape non représentée) la consigne corrigée de fabrication de la lentille ophtalmique 10, à partir des caractéristiques que comporte le fichier « enveloppe géométrique cible modifiée » et éventuellement des caractéristiques relatives au matériau.

L'unité 2 est configurée pour générer (étape non représentée) le fichier corrigé de fabrication correspondant à la consigne corrigée de fabrication de la lentille ophtalmique 10 sur le support de fabrication 12 de la machine de fabrication additive 1 (dans un repère connu de cette machine).

Ce fichier « consigne corrigée » est similaire au fichier de géométrie cible modifiée de la lentille ophtalmique généré à l'étape 406, si ce n'est qu'il reflète une description transcrite de la géométrie souhaitée de cette lentille ophtalmique 10 à fabriquer, avec en pratique, un agencement des éléments de volume prédéterminés du ou des matériaux ; incluant une orientation angulaire déterminée de la lentille ophtalmique 10 sur le support de fabrication 12 pour sa fabrication et des modifications liées à un éventuel retrait dimensionnel ainsi qu'à une éventuelle variation d'indice de la lentille ophtalmique 10.

L'unité 2 est également configurée pour lancer l'ajout en courbure par fabrication additive du nombre déterminé d'éléments de volume prédéterminés sur la ou les zones P, puis poursuivre la fabrication additive de la lentille ophtalmique 10 avec la consigne cible modifiée de fabrication (consigne corrigée).

L'unité de contrôle et de commande 2 est donc configurée pour exécuter un logiciel pour la mise en œuvre des différentes étapes du procédé de fabrication de la lentille ophtalmique 10 décrites ci-dessus, en utilisant les paramètres reçus, afin de réaliser cette lentille ophtalmique 10.

Dans une variante non illustrée, une interface de communication client-serveur comporte un côté dit fournisseur et un autre côté dit client, ces deux côtés communicant via un réseau, par exemple du type internet.

Le côté fournisseur comporte un serveur relié à une unité de contrôle et de commande du même type que celle de la figure 1, mais cette fois-ci non intégrée à une machine de fabrication additive, ce serveur étant configuré pour communiquer avec l'interface internet.

Le côté client est configuré pour communiquer avec l'interface internet, et est relié à une unité de contrôle et de commande du même type que celle du côté fournisseur.

En outre, l'unité côté client est reliée à une machine de fabrication additive du même type que celle de la figure 1 pour fabriquer la lentille ophtalmique.

L'unité côté client est configurée pour recevoir les fichiers de données correspondant aux étapes 101 et 102 et les données caractéristiques du matériau utilisé.

L'unité côté client envoie par l'intermédiaire de l'interface internet et du serveur ces données à l'unité côté fournisseur pour la détermination des consignes cible et cible modifiée de fabrication de la lentille ophtalmique.

L'unité côté fournisseur exécute via son système de traitement de données le programme d'ordinateur qu'il contient pour mettre en œuvre le procédé de fabrication et ainsi déterminer d'une part la consigne cible de fabrication de la lentille ophtalmique et d'autre part la ou les consignes cibles modifiées de fabrication de cette lentille ophtalmique.

L'unité côté fournisseur envoie en temps réel, par l'intermédiaire du serveur et du réseau, un fichier représentatif de la consigne cible de fabrication de la lentille ophtalmique puis un fichier représentatif de la consigne cible modifiée de fabrication de la lentille ophtalmique déterminée, à l'unité de contrôle et de commande côté client.

L'unité côté client est configurée pour exécuter un logiciel pour la mise en œuvre du procédé de fabrication de la lentille ophtalmique, en utilisant les paramètres reçus, afin de réaliser cette lentille ophtalmique.

Dans des variantes non illustrées :
- la pluralité d'éléments de volume prédéterminés juxtaposés et superposés forme des couches superposées qui présentent chacune une épaisseur constante ou variable sur la longueur et/ou qui présentent toutes la même épaisseur ou pas ;
- le matériau est par exemple un matériau transparent déposé par stéréolithographie, ce matériau étant par exemple un polymère époxy commercialisé par la société 3D SYSTEMS sous la marque Accura® ClearVue;
- le matériau est un photopolymère comportant une ou plusieurs familles de molécules ayant une ou plusieurs fonctions acryliques, methacryliques, acrylates, methacrylates, une famille de molécules ayant une ou plusieurs fonctions époxy, thioépoxy, thiol-ène une famille de molécules ayant une ou plusieurs fonctions vinyle éther, vinyle caprolactame, vinylpyrolidone, une famille de matériau de type hyperbranchée, de type hybride organique/inorganique, ou une combinaison de ces fonctions ; les fonctions chimiques mentionnées pouvant être portées par des monomères ou ces matériaux étant bien connu de l'homme de l'art dans le domaine des lentilles ophtalmiques des oligomères ou une combinaison de monomères et oligomères ;
- le matériau peut comporter au moins un photo-initiateur ;
- le matériau peut comporter des colloïdes, en particulier des particules colloïdales ayant des dimensions par exemple inférieures aux longueurs d'onde visibles, telles que par exemple des particules colloïdales d'oxyde de Silice SiO2 ou des particules colloïdales d'oxyde de Zircone ZrO2 ;
- le matériau peut comporter, dans au moins certains des éléments de volume prédéterminés, un pigment ou un colorant, par exemple un colorant qui appartient aux familles des azo, ou rhodamines, ou cyanines, ou polymethines, ou merocyanines, ou fluorescéines, ou pyrylium, ou phtalocyanines, ou pérylènes, ou benzanthrones, ou anthrapyrimidines, ou anthrapyridones, ou encore un colorant pourvu de complexes métalliques tels que des chélates ou des cryptates de terres rares ;
- la lentille ophtalmique est réalisée dans d'autres matériaux tels que le polycarbonate, le polymethylmethacylate, le polyamide ou des polymères thiouréthanes ou épisulfides, ces matériaux étant bien connu de l'homme de l'art dans le domaine des lentilles ophtalmiques ;
- le procédé comporte en outre une ou plusieurs autres étapes de fabrication, par exemple une étape de détourage et/ou une étape de marquage pour former des marques dites temporaires ;
- le support de fabrication additive présente une surface de fabrication sur laquelle la lentille ophtalmique est fabriquée de manière additive, laquelle surface de fabrication est au moins partiellement plane et/ou au moins partiellement sphérique ;
- le procédé de fabrication ne comporte pas d'étape supplémentaire d'irradiation thermique, et/ou une étape supplémentaire d'irradiation actinique, tels que, par exemple, dans les longueurs d'ondes du spectre des ultra-violet, voire aucune étape d'irradiation ;
- le procédé de fabrication comporte une étape où la prise en compte de la variation d'indice du matériau de la lentille ophtalmique peut se faire sous la forme d'une boucle d'optimisation itérative selon des procédures d'optimisation connues ;
- le matériau de la lentille ophtalmique comporte optionnellement un ou plusieurs colorants, et/ou des nanoparticules configurées pour modifier sa transmission optique et/ou son aspect, et/ou des nanoparticules ou additifs configurés pour modifier ses propriétés mécaniques ;
- la machine de fabrication additive n'est pas une machine d'impression tridimensionnelle mais plutôt une machine de stéréolithographie, (SLA pour « Stereolithography *Apparatus* » en anglais) ou une machine d'extrusion par fil thermoplastique, aussi appelée machine de dépôt à fil tendu (FDM pour « *Fuse Deposition Modeling* » en anglais) ;
- l'unité de contrôle et de commande comporte un microcontrôleur en place du microprocesseur ;
- l'interface de communication client-serveur comporte des dispositifs configurés pour transférer les consignes cible et cible modifiée de fabrication de la lentille ophtalmique déterminées par un programme d'ordinateur, lequel comporte des instructions configurées pour mettre en œuvre chacune des étapes du procédé de fabrication décrit ci-dessus lorsque ce programme d'ordinateur est exécuté dans une unité de contrôle et de commande qui comporte des éléments systémiques configurés pour exécuter ledit programme d'ordinateur ;
- l'interface de communication permet la communication via d'autres moyens que le réseau internet, par exemple via un réseau intranet ou un réseau privé sécurisé ; et/ou
- l'interface de communication permet de transférer l'ensemble du programme d'ordinateur vers un système de traitement de données distant pour la mise en œuvre du procédé de fabrication dans une autre machine de fabrication additive et optionnellement dans une ou plusieurs autres machines de traitement.

On rappelle plus généralement que l'invention ne se limite pas aux exemples décrits et représentés.

## Revendications

1. Procédé de fabrication d'une lentille ophtalmique (10) présentant au moins une fonction optique et comportant :
- l'étape de fabriquer de manière additive (100) ladite lentille ophtalmique (10), par le dépôt d'une pluralité d'éléments de volume prédéterminés d'au moins un matériau ayant un indice de réfraction prédéterminé, conformément à une enveloppe géométrique cible (18) ;
- l'étape de déterminer une enveloppe géométrique réelle au moins une fois au cours de la mise en œuvre de ladite l'étape de fabriquer de manière additive (100) ; et
- l'étape de déclencher une action correctrice s'il existe dans une zone (P) un écart (Ecdif) supérieur à un seuil prédéterminé (S1, S2) entre ladite enveloppe géométrique cible (18) et ladite enveloppe géométrique réelle ; **caractérisé en ce que** ladite étape de déclencher une action correctrice comporte :
- la mise en œuvre d'une première action correctrice s'il existe dans ladite zone (P), entre ladite enveloppe géométrique cible (18) et ladite enveloppe géométrique réelle, un écart (Ecdif) supérieur à un premier seuil prédéterminé (S1) et inférieur à un deuxième seuil prédéterminé (S2) ; et
- la mise en œuvre d'une deuxième action correctrice distincte de la première action correctrice s'il existe dans ladite zone (P), entre ladite enveloppe géométrique cible (18) et ladite enveloppe géométrique réelle, un écart (Ecdif) supérieur audit deuxième seuil prédéterminé (S2) ;
ladite première action correctrice comportant le dépôt, dit ajout en altitude, sur ladite zone (P), d'au moins un élément de volume prédéterminé additionnel (14) sans remplacer l'enveloppe géométrique cible (18) tandis que la deuxième action correctrice comporte la détermination d'une enveloppe géométrique cible modifiée (19) remplaçant ladite enveloppe géométrique cible (18).

2. Procédé selon la revendication 1, **caractérisé en ce que** ladite action correctrice comporte le dépôt sur ladite zone (P) d'au moins un élément de volume prédéterminé additionnel (14) et/ou la détermination d'une enveloppe géométrique cible modifiée (19) remplaçant ladite enveloppe géométrique cible (18).

3. Procédé selon la revendication 1, **caractérisé en ce que** la deuxième action correctrice comporte en outre le dépôt, dit ajout en courbure, sur ladite zone (P), d'au moins un élément de volume prédéterminé additionnel (14).

4. Procédé selon l'une quelconque des revendications 1 à 3, **caractérisé en ce que** :
- ladite étape de déterminer une enveloppe géométrique réelle comporte l'étape de déterminer (200) au moins une valeur géométrique représentative de la courbure moyenne (Cm) sur ladite zone (P) ; et
- pour déterminer ledit écart (Ecdif) dans ladite zone (P), ledit procédé comporte l'étape de comparer (300) ladite au moins une valeur géométrique représentative de la courbure moyenne (Cm) à une valeur géométrique représentative de la courbure moyenne cible (Cmc) sur ladite zone (P) et déterminée à partir de ladite enveloppe géométrique cible (18).

5. Procédé selon la revendication 4, **caractérisé en ce que** ladite étape de déterminer (200) au moins une valeur géométrique représentative de la courbure moyenne (Cm) comporte l'étape de mesurer (202) au moins un couple de rayons de courbure (Rc₁, Rc₂) associé à un point déterminé sur ladite zone (P).

6. Procédé selon la revendication 5, **caractérisé en ce que** ladite étape de déterminer (200) au moins une valeur géométrique représentative de la courbure moyenne (Cm) comporte en outre l'étape de déterminer (203) la valeur géométrique de la courbure moyenne audit point déterminé de ladite zone (P) et/ou une valeur représentative de la plus grande différence de valeurs géométriques de courbure moyenne sur ladite zone (P), à partir de valeurs géométriques mesurées dudit au moins un couple de rayons de courbure (Rc₁, RC2).

7. Procédé selon l'une des revendications 5 et 6, **caractérisé en ce que** ladite étape de déterminer (200) au moins une valeur géométrique représentative de la courbure moyenne (Cm) comporte en outre l'étape de déterminer (204) des caractéristiques géométriques réelles de ladite lentille ophtalmique (10), définissant ladite enveloppe géométrique réelle, à partir de valeurs géométriques mesurées dudit au moins un couple de rayons de courbure (Rc₁, Rc₂) et/ou de ladite valeur géométrique de courbure moyenne déterminée sur ladite zone (P) et/ou de ladite valeur représentative de la plus grande différence de valeurs géométriques de courbure moyenne sur ladite zone (P).

8. Procédé selon l'une quelconque des revendications 1 à 7, **caractérisé en ce que** ladite zone (P) présente un profil de courbure cible achevé.

9. Machine de fabrication additive configurée pour fabriquer une lentille ophtalmique (10) et comportant une unité de contrôle et de commande (2) pourvue d'éléments systémiques (3, 4, 5) configurés pour exécuter un programme d'ordinateur comportant des instructions configurées pour mettre en œuvre chacune des étapes du procédé selon l'une quelconque des revendications 1 à 8.

10. Machine selon la revendication 9, **caractérisée en ce qu'**elle comporte en outre un dispositif de mesure (30) configuré pour mesurer des valeurs géométriques représentatives de la courbure moyenne (Cm) au moins en un point déterminé d'au moins une zone (P) de ladite lentille ophtalmique (10).

## Patentansprüche

1. Verfahren zur Herstellung einer ophthalmischen Linse (10), die mindestens eine optische Funktion aufweist, umfassend:
- den Schritt des additiven Herstellens (100) der ophthalmischen Linse (10) durch die Ablagerung mehrerer vorbestimmter Volumenelemente wenigstens eines Materials mit einem vorbestimmten Brechungsindex, gemäß einer geometrischen Zielhülle (18);
- den Schritt des Bestimmens einer tatsächlichen geometrischen Hülle wenigstens einmal während der Durchführung des Schrittes des additiven Herstellens (100); und
- den Schritt des Auslösens einer Korrekturaktion, falls in einem Bereich (P) eine Abweichung (Ecdif) zwischen der geometrischen Zielhülle (18) und der tatsächlichen geometrischen Hülle vorhanden ist, die größer als ein vorbestimmter Schwellenwert (S1, S2) ist;
**dadurch gekennzeichnet, dass** der Schritt des Auslösens einer Korrekturaktion umfasst:
- die Durchführung einer ersten Korrekturaktion, falls in dem Bereich (P) zwischen der geometrischen Zielhülle (18) und der tatsächlichen geometrischen Hülle eine Abweichung (Ecdif) vorhanden ist, die größer als ein erster vorbestimmter Schwellenwert (S1) und kleiner als ein zweiter vorbestimmter Schwellenwert (S2) ist; und
- die Durchführung einer zweiten Korrekturaktion, die von der ersten Korrekturaktion verschieden ist, falls in dem Bereich (P) zwischen der geometrischen Zielhülle (18) und der tatsächlichen geometrischen Hülle eine Abweichung (Ecdif) vorhanden ist, die größer als der zweite vorbestimmte Schwellenwert (S2) ist;
wobei die erste Korrekturaktion die Ablagerung, Höhenzusatz genannt, wenigstens eines zusätzlichen vorbestimmten Volumenelements (14) auf den Bereich (P) umfasst, ohne die geometrische Zielhülle (18) zu ersetzen, während die zweite Korrekturaktion die Bestimmung einer modifizierten geometrischen Zielhülle (19) umfasst, welche die geometrische Zielhülle (18) ersetzt.

2. Verfahren nach Anspruch 1, **dadurch gekennzeichnet, dass** die Korrekturaktion die Ablagerung wenigstens eines zusätzlichen vorbestimmten Volumenelements (14) auf den Bereich (P) und/oder die Bestimmung einer modifizierten geometrischen Zielhülle (19), welche die geometrische Zielhülle (18) ersetzt, umfasst.

3. Verfahren nach Anspruch 1, **dadurch gekennzeichnet, dass** die zweite Korrekturaktion außerdem die Ablagerung, Krümmungszusatz genannt, wenigstens eines zusätzlichen vorbestimmten Volumenelements (14) auf den Bereich (P) umfasst.

4. Verfahren nach einem der Ansprüche 1 bis 3, **dadurch gekennzeichnet, dass**:
- der Schritt des Bestimmens einer tatsächlichen geometrischen Hülle den Schritt des Bestimmens (200) wenigstens eines geometrischen Wertes, der für die mittlere Krümmung (Cm) auf dem Bereich (P) repräsentativ ist, umfasst; und
- zum Bestimmen der Abweichung (Ecdif) im Bereich (P) das Verfahren den Schritt des Vergleichens (300) des wenigstens eines geometrischen Wertes, der für die mittlere Krümmung (Cm) repräsentativ ist, mit einem geometrischen Wert, der für die mittlere Zielkrümmung (Cmc) auf dem Bereich (P) repräsentativ ist und aus der geometrischen Zielhülle (18) bestimmt wird, umfasst.

5. Verfahren nach Anspruch 4, **dadurch gekennzeichnet, dass** der Schritt des Bestimmens (200) wenigstens eines geometrischen Wertes, der für die mittlere Krümmung (Cm) repräsentativ ist, den Schritt des Messens (202) wenigstens eines Paares von Krümmungsradien (Rc₁, Rc₂), das einem bestimmten Punkt auf dem Bereich (P) zugeordnet ist, umfasst.

6. Verfahren nach Anspruch 5, **dadurch gekennzeichnet, dass** der Schritt des Bestimmens (200) wenigstens eines geometrischen Wertes, der für die mittlere Krümmung (Cm) repräsentativ ist, außerdem den Schritt des Bestimmens (203) des geometrischen Wertes der mittleren Krümmung an dem bestimmten Punkt des Bereichs (P) und/oder eines Wertes, der für die größte Differenz von geometrischen Werten der mittleren Krümmung im Bereich (P) repräsentativ ist, aus gemessenen geometrischen Werten des wenigstens einen Paares von Krümmungsradien (Rc₁, Rc₂) umfasst.

7. Verfahren nach einem der Ansprüche 5 und 6, **dadurch gekennzeichnet, dass** der Schritt des Bestimmens (200) wenigstens eines geometrischen Wertes, der für die mittlere Krümmung (Cm) repräsentativ ist, außerdem den Schritt des Bestimmens (204) von tatsächlichen geometrischen Merkmalen der ophthalmischen Linse (10), welche die tatsächliche geometrische Hülle definieren, aus gemessenen geometrischen Werten des wenigstens einen Paares von Krümmungsradien (Rc₁, Rc₂) und/oder dem geometrischen Wert der mittleren Krümmung, der im Bereich (P) bestimmt wurde, und/oder dem Wert, der für die größte Differenz von geometrischen Werten der mittleren Krümmung im Bereich (P) repräsentativ ist, umfasst.

8. Verfahren nach einem der Ansprüche 1 bis 7, **dadurch gekennzeichnet, dass** der Bereich (P) ein fertiggestelltes Zielkrümmungsprofil aufweist.

9. Maschine zur additiven Herstellung, die dafür ausgelegt ist, eine ophthalmische Linse (10) herzustellen, und eine Kontroll- und Steuereinheit (2) aufweist, die mit Systemelementen (3, 4, 5) versehen ist, die dafür ausgelegt sind, ein Computerprogramm auszuführen, das Anweisungen umfasst, die dafür ausgelegt sind, jeden der Schritte des Verfahrens nach einem der Ansprüche 1 bis 8 durchzuführen.

10. Maschine nach Anspruch 9, **dadurch gekennzeichnet, dass** sie außerdem eine Messvorrichtung (30) aufweist, die dafür ausgelegt ist, geometrische Werte zu messen, die für die mittlere Krümmung (Cm) wenigstens in einem bestimmten Punkt wenigstens eines Bereichs (P) der ophthalmischen Linse (10) repräsentativ sind.

## Claims

1. Process for manufacturing an ophthalmic lens (10) having at least one optical function and including:
- the step (100) of additively manufacturing said ophthalmic lens (10), by depositing a plurality of predetermined volume elements of at least one material having a predetermined refractive index, in accordance with a target geometric envelope (18);
- the step of determining an actual geometric envelope at least once during the implementation of said additive manufacturing step (100); and
- the step of triggering a corrective action if there is in a zone (P) a difference (Ecdif) larger than a predetermined threshold (Sl, S2) between said target geometric envelope (18) and said actual geometric envelope;
**characterized in that** said step of triggering a corrective action includes:
- implementing a first corrective action if there is, in said zone (P), between said target geometric envelope (18) and said actual geometric envelope, a difference (Ecdif) larger than a first predetermined threshold (S1) and lower than a second predetermined threshold (S2); and
- implementing a second corrective action different from the first corrective action if there is, in said zone (P), between said target geometric envelope (18) and said actual geometric envelope, a difference (Ecdif) larger than said second predetermined threshold (S2);
said first corrective action including depositing, on said zone (P), at least one additional predetermined volume element (14) without replacing the target geometric envelope (18), this deposition being said to be an altitude addition, whereas the second corrective action includes determining a modified target geometric envelope (19) replacing said target geometric envelope (18) .

2. Process according to Claim 1, **characterized in that** said corrective action includes depositing on said zone (P) at least one additional predetermined volume element (14) and/or determining a modified target geometric envelope (19) replacing said target geometric envelope (18).

3. Process according to Claim 1, **characterized in that** the second corrective action furthermore includes depositing, on said zone (P), at least one additional predetermined volume element (14), this deposition being said to be a curvature addition.

4. Process according to any one of Claims 1 to 3, **characterized in that**:
- said step of determining an actual geometric envelope includes the step (200) of determining at least one geometric value representative of the average curvature (Cm) in said zone (P); and
- to determine said difference (Ecdif) in said zone (P), said process includes the step (300) of comparing said at least one geometric value representative of the average curvature (Cm) to a geometric value representative of the target average curvature (Cmc) required in said zone (P) and determined from said target geometric envelope (18).

5. Process according to Claim 4, **characterized in that** said step (200) of determining at least one geometric value representative of the average curvature (Cm) includes the step (202) of measuring at least one pair of radii of curvature (Rc₁, Rc₂) associated with a given point in said zone (P).

6. Process according to Claim 5, **characterized in that** said step (200) of determining at least one geometric value representative of the average curvature (Cm) furthermore includes the step (203) of determining the geometric value of the average curvature at said given point in said zone (P) and/or a value representative of the largest difference in average-curvature geometric values in said zone (P), from measured geometric values of said at least one pair of radii of curvature (Rc₁, Rc₂).

7. Process according to one of Claims 5 and 6, **characterized in that** said step (200) of determining at least one geometric value representative of the average curvature (Cm) furthermore includes the step (204) of determining actual geometric characteristics of said ophthalmic lens (10), defining said actual geometric envelope, from measured geometric values of said at least one pair of radii of curvature (Rc₁, Rc₂) and/or from said average-curvature geometric value determined in said zone (P) and/or from said value representative of the largest difference in average-curvature geometric values in said zone (P).

8. Process according to any one of Claims 1 to 7, **characterized in that** said zone (P) has a finalized target curvature profile.

9. Additive manufacturing machine configured to manufacture an ophthalmic lens (10) and including a command/control unit (2) provided with system elements (3, 4, 5) configured to run a computer program including instructions configured to implement each of the steps of the process according to any one of Claims 1 to 8.

10. Machine according to Claim 9, **characterized in that** it furthermore includes a measuring device (30) configured to measure geometric values representative of the average curvature (Cm) at least at a given point in at least one zone (P) of said ophthalmic lens (10).
